# EUROPÄISCHE PATENTSCHRIFT

(11) **EP 1 892 885 B1**
(45) Veröffentlichungstag und Bekanntmachung des Hinweises auf die Patenterteilung: **03.11.2010**
(21) Anmeldenummer: 07122807.6
(22) Anmeldetag: 15.07.2003
(51) Int. Cl.: H04L 12/24, H04L 12/26, H04L 12/40

(54) **Busstation mit integrierter Busmonitorfunktion**
Bus station with an integrated bus monitor function
Station de bus à fonction intégrée de surveillance des bus

(30) Priorität: 18.07.2002 US 397558 P
(43) Veröffentlichungstag der Anmeldung: 27.02.2008
(62) Teilanmeldung aus: 03764993.6
(73) Patentinhaber: VEGA Grieshaber KG, 77709 Wolfach (DE)
(72) Erfinder: Gros, Thomas, 56479, Neustadt/ Westerwald (DE); Faist, Fridolin, 77709, Oberwolfach (DE)
(74) Vertreter: Kopf, Korbinian Paul

(56) Entgegenhaltungen:
- US-A- 5 796 721
- US-A- 6 108 782
- US-A- 6 112 241

## Beschreibung

### TECHNISCHES GEBIET

Die vorliegende Erfindung betrifft eine Busstation, die zur Integration in ein Bussystem oder zum Anschließen an ein Bussystem bestimmt ist. Weiterhin betrifft die Erfindung ein Netzwerk mit zumindest einer solchen Busstation und die Verwendung einer solchen Busstation zur Überwachung eines Bussystems.

Eine Busstation liefert anderen Busteilnehmern bzw. Busstationen Prozessdaten oder Signale in Form von Telegrammen über das Bussystem. Vorzugsweise werden von einer solchen Busstation über das Bussystem auch entsprechende Daten und Signale empfangen. Insbesondere betrifft die Erfindung eine Busstation im Bereich der Füllstand- oder Druckmesstechnik, die in ein Feldbussystem wie beispielsweise ein Profibus PA integriert oder hieran angeschlossen ist, um mit anderen an dem Bussystem angeschlossenen Busstationen digital zu kommunizieren. Insbesondere kann hierdurch eine Überwachung des Bussystems ermöglicht werden.

Als Busstation können im Rahmen der vorliegenden Erfindung insbesondere Sensoren, Aktoren, Steuerungseinheiten, Gateways, Bridges, Koppler und andere Einheiten der Aktorik und Sensorik bezeichnet werden, die zum Anschluss an ein Bussystem bestimmt sind und die über das Bussystem mit anderen Busstationen bzw. Busteilnehmern uni- oder bidirektional kommunizieren, insbesondere um Prozessdaten dem Bussystem zur Verfügung zu stellen und/oder um Prozessdaten aus dem Bussystem zu empfangen.

Häufig werden Sensoren und Aktoren über ein analoges 4 - 20 mA-Signal mit einer Steuerung- oder Auswerteeinheit direkt verbunden. Für jede Verbindung zwischen Sensor bzw. Aktor und der Steuer- oder Auswerteeinheit ist bei dieser Technik ein eigenes zweiadriges Kabel notwendig. Zusätzlich muss für jeden Sensor und Aktor eine Ein- bzw. Ausgangsschaltung (I/O) in der Steuerung- oder Auswerteeinheit (beispielsweise ein PC oder SPS) vorgesehen werden. Um den Verkabelungsaufwand möglichst gering zu halten, d.h. um nicht jeden anzusteuernden Sensor oder Aktor einzeln über eine eigene Verkabelung an die Steuerung- oder Auswerteeinheit anschließen zu müssen, werden die einzelnen Busstationen (beispielsweise Sensoren, Aktoren, Steuereinheit, Gateway, etc.) über eine gemeinsame Kabelinfrastruktur - einen sogenannten Bus (Binary Utility System) - miteinander verbunden, wodurch der Verkabelungsaufwand möglichst gering gehalten werden kann.

Im Bereich der Füllstandstechnik kommen vor allem sogenannte Feldbussysteme zum Einsatz. Ein Feldbus verbindet üblicherweise Komponenten der Aktorik öder Sensorik (wie beispielsweise Feldgeräte) einerseits mit einem Leit- oder Steuerrechner andererseits. Dabei werden Prozessdaten von der Sensorik registriert, über den Feldbus zum Steuerrechner übertragen und dort ausgewertet. Als Ergebnis des Auswertungsprozesses werden die Daten vom Steuerrechner wieder hin zu den Stationen der Aktorik übertragen, die dann regelnd in den zu überwachenden Prozess eingreifen. Dieser Datenaustausch erfolgt meist auf digitaler Basis. Ferner ist es auch möglich, die am Bussystem angeschlossenen Feldgeräte über das Bussystem zu kalibrieren oder in sonstiger Weise zu manipulieren, um beispielweise ein Feldgerät in einen bestimmten Betriebmodus zu versetzen.

Es ist anzumerken, dass eine Busstation im Sinne der vorliegenden Erfindung auch als Busteilnehmer oder allgemein als Feldgerät bezeichnet werden kann. Eine solche Busstation hat eine primäre Funktionalität wie beispielsweise Prozessdaten oder Umgebungsbedingungen zu messen. Beispielsweise kann mit einer Füllstandmessvorrichtung der Füllstand eines Füllgutes in einem Behälter oder Tank ermittelt werden. Der den Füllstand repräsentierende Wert wird dann über einen Bus zu einer Leitstelle oder dergleichen übertragen.

### HINTERGRUND DER ERFINDUNG

Problematisch bei dieser Art der Vernetzung von Geräten bzw. Busstationen untereinander ist jedoch die Überwachungs- bzw. Diagnosemöglichkeit des Systems im Fehlerfall oder auch die Optimierung des Systems. Es besteht daher der Bedarf, derartige Bussysteme zu überwachen, Fehlerzustände zu diagnostizieren und Optimierungen des Bussystems zuzulassen bzw. zu erleichtern.

Treten bei derartigen Bussystemen Kommunikationsprobleme zwischen einem oder mehreren Sensoren oder Aktoren und der Steuereinheit auf, so bereitet die Analyse eines derartigen Problems erheblichen Aufwand, sofern sich ein solches Problem überhaupt lösen lässt. In derartigen Fällen kann ein herkömmliches Multimeter nur noch bedingt Informationen über die Ursache der fehlerhaften Kommunikation liefern. Vielfach besteht dann nur noch die Möglichkeit, über zusätzliche externe und zudem meist teuere Geräte eine Überwachung oder Diagnose des Bussystems durchzuführen. Hierfür werden meist sogenannte Busmonitore als rein passive und externe Geräte an das Bussystem angeschlossen, um eine Überwachung oder Diagnose im Fehlerfall zu ermöglichen.

Der Busmonitor ist dabei ein rein passives Gerät und nimmt nicht aktiv an der Kommunikation des Bussystems teil. Seine Aufgabe besteht vielmehr darin, jeglichen Datenverkehr des Bussystems "mitzuhören" und in einem dafür vorgesehenen Speicher abzulegen. Um die so abgelegten Daten zu einem späteren Diagnosezeitpunkt wieder auffinden und identifizieren zu können, wird jedes einzelne Datentelegramm zusammen mit einem Zeitstempel und/oder einem Index in einem Speicher des Busmonitors abgelegt. Häufig verfügen derartige Busmonitore über ein eigenes Display oder einen Monitor, womit der registrierte Datenverkehr unmittelbar online zur Anzeige gebracht werden kann. Prinzipiell besteht aber auch die Möglichkeit, auf die im Speicher abgelegten und früher aufgezeichneten Daten zurückzugreifen, um sie zu einem späteren Zeitpunkt offline analysieren zu können.

Weiterhin umfassen derartige Busmonitore häufig eine Filterfunktion, die es vor allem bei komplexen Systemen erlaubt, den Telegrammverkehr des Bussystems nach bestimmten Filterkriterien vorzusortieren und abzulegen. Im Wesentlichen ist bei derartigen Filtern zwischen "Online-Filtern" und "Offline-Filtern" zu unterscheiden. Als Online-Filter wird ein Filter bezeichnet, der die am Bussystem auftretenden Telegramme bereits während der Aufzeichnung - also online - bewertet, jedoch nur diejenigen abspeichert, die einer bestimmten Filterregel entsprechen. Der Vorteil eines Online-Filters besteht darin, dass das zu speichernde Datenaufkommen reduziert wird; nachteilig ist jedoch, dass durch den Filtervorgang möglicherweise relevante Telegramme verloren gehen, wodurch es zu unvollständigen Aufzeichnungen kommt. Als Offline-Filter hingegen werden Filter bezeichnet, die Daten aus früheren Aufzeichnungen analysieren, wodurch die Daten übersichtlicher dargestellt werden können. Der Vorteil eines derartigen Offline-Filters besteht darin, dass nur die im Moment der Analyse interessanten Daten dargestellt werden können, jedoch bei Bedarf auch auf ein Gesamtabbild der Daten umgeschaltet werden kann. Nachteilig erweisen sich derartige Offline-Filtern jedoch dadurch, dass diese stets ein sehr hohes Datenaufkommen bedingen.

So zeigt die US 4,817,080A ein Überwachungssystem für ein lokales Netzwerk, bei dem ein Monitormanager Informationen von individuellen Monstoreinrichtungen erhält, die mit verschiedenen Bussen des lokalen Netzwerkes verbunden sind. Aus der JP 05130108 A ist ein busartiges, lokales Netzwerk bekannt, das Busmonitoreinrichtungen enthält.

In der US-A-6 112 241 ist eine Netzwerkverbindungsvorrichtung mit zumindest zwei Ports und einem Probe beschrieben.

Ferner ist aus der US-A-6 108 782 ein Verfahren zum verteilten Sammeln von Netzwerkstatistiken bekannt

In der FR 2 691 029 A1 ist ein Fernanalyseverfahren von Daten aus einem Protokoll offenbart. Hier werden Daten eines Protokolls, die auf einen zu testenden Übertragungsbus übertragen werden, analysiert. Der Bus verbindet mindestens einen Telefonapparat mit einem digitalen Netzwerkterminal in einem Übertragungssystem von digitalen Daten, das die Verbindung zwischen mindestens zwei Telefonapparaten gewährleisten soll. Es wird hierin darauf abgestellt, dass die Daten auch an einem entfernten Ort zur Verfügung stehen, um häufige Fahrten eines hochqualifizierten Personals und den Transport eines Analysegerätes zu den verschiedenen Anwenderkunden zu vermeiden.

Aus der EP 0 601 768 A2 ist eine Busmonitorschaltung für Schaltsysteme bekannt. Auch hier ist ein Busmonitor separat an einen Bus anzuschließen. Auch die WO 96 38792 A1 offenbart ein Monitoring von Daten in einem Computernetzwerk. Auch hier wird ein separates Monitoring an einem Bus betrieben. In der WO 98/14852 A1 ist ein Netzwerk offenbart, bei dem verschiedene Busstationen und auch sogenannte Bridges anschließbar sind. Hier ist ein Interface zwischen einem entfernten Kommunikationsnetzwerk und einem Prozesssteuersystem geschaltet. Ein sogenannter Softwarelayer ermöglicht die Verbindung zwischen dem entfernt liegenden Kommunikationsnetzwerk und der Prozesssteuerung. Ähnliche Überwachungseinheiten für verbesserte Datenübertragungssicherheit in einem Master-Slave-Bussystem sind aus der WO 00/52579 A1 oder EP 1 049 292 A2 bekannt.

Anzumerken ist noch, dass aus der DE 198 52 276 A1 ein Verfahren zum Empfangen einer Nachricht über einen seriellen Datenbus bekannt ist und in der JP 2002164899 A ein Netzwerkmonitoring für Waren gezeigt ist.

Wie bereits erwähnt, müssen die zuvor beschriebenen Busmonitore als zusätzliche Geräte neben den bekannten Busstationen wie Sensoren etc. an das bestehende Bussystem angeschlossen werden. Es besteht hierbei die Gefahr, dass dadurch als Nebeneffekt das Bussystem infolge veränderter elektrischer Kenngrößen des Gesamtsystems beeinflusst wird, was dann zu fehlerhaften Diagnosen führen kann.

Weiterhin erweisen sich diese externen, passiven Busmonitore dadurch als nachteilig, dass mit Ihnen Langzeitdiagnosen nicht durchführbar sind, da diese Geräte nicht ständig im Bussystem verbleiben können. Eine Fehlerursachenforschung ist daher häufig nicht möglich, da diese Busmonitore zum Zeitpunkt, zu dem ein Fehler auftritt, meist nicht im Bussystem eingebaut sind.

Derartige externe Busmonitore sind überdies deswegen als für die Fehlerdiagnose ungeeignet, da mit Ihnen nur der lokale Datenverkehr, an der Stelle, an der der Busmonitor angeschlossen ist, registriert werden kann. Eine globale Überwachung hingegen ist nicht möglich. Der jeweilige Datenverkehr einzelner Busstationen hinter ihrem jeweiligen Businterface ist somit für einen externen Busmonitor nicht registrierbar, d.h. Fehler in der Kommunikation in der Busstation bleiben unentdeckt.

### DARSTELLUNG DER ERFINDUNG

Der vorliegenden Erfindung liegt somit das Problem zugrunde, ein verbessertes Busmonitoring zur Fehlerursachenforschung oder Systemdiagnose zu ermöglichen.

Dieses Problem wird gemäß einen ersten Aspekt der Erfindung durch eine neu konzipierte Busstation wie beispielsweise einem Sensor, einem Aktor, einer Steuereinheit oder einem Gateway, etc. gelöst, die die primäre Funktionalität des jeweiligen Gerätes mit einer zweiten Funktionalität, der Busmonitorfunktion, kombiniert, indem in die Busstation eine Busmonitoreinrichtung integriert wird. Unter der primären Funktionalität wird im Rahmen der vorliegenden Erfindung der Hauptzweck der jeweiligen Busstation, also des an den Bus anzuschließenden Gerätes, bezeichnet, für den es eingesetzt wird. So besteht die primäre Funktionalität eines Sensors beispielsweise darin, physikalische Vorgänge zu erfassen und in elektrische oder digitale Signale umzusetzen, die weiter verarbeitet und ausgewertet werden können. Erfindungsgemäß nutzt nun die jeweilige Busstation das jeweils ohnehin für Zwecke der Prozessdatenkommunikation vorhandene Businterface neben dieser primären Funktionalität weiterhin, um eine Überwachung des Bussystems als sekundäre Aufgabe durchzuführen.

Um für diese sekundäre Funktionalität, die Datentelegramme auf dem Bussystem in Form von Monitordaten zu erfassen, ist in die Busstation eine Busmonitoreinrichtung integriert, wofür unter anderem beispielsweise die Software der Busstation um die Funktionalität zur Erfassung dieser Datentelegramme erweitert wird.

Neben der erwähnten möglichen Erweiterung der vorhandenen Software ist es ebenfalls möglich, eine eigene Software zur Erfassung der Datentelegramme in die Busstation zu integrieren. Um auf die so erfassten Monitordaten, beispielsweise im Offline-Betrieb zurückgreifen zu können, kann die Busmonitoreinrichtung um einen Telegrammspeicher erweitert werden, in dem die idealerweise mit einem Zeitstempel und/oder einem Index versehenen Telegramme abgelegt werden. Erfindungsgemäß wird also durch eine solche neue Busstation mit Busmonitoreinrichtung das Bussystem nicht negativ beeinflusst, und es kann hiermit auch der Datenverkehr einer Busstation überwacht werden, der stationsintern "hinter" dem jeweiligen Businterface der einzelnen Busstation stattfindet.

Es kann sich als besonders günstig erweisen, alle in einem Bussystem vorhandenen Busstationen mit der erfindungsgemäßen integrierten Busmonitorfunktion auszustatten, da dadurch alle an beliebiger Stelle gewonnen Monitordaten an jedem beliebigen Ort des Systems und zu jeder beliebigen Zeit verfügbar gemacht werden. Dieser Rückgriff auf den erfassten Datenbestand erfolgt vorzugsweise über die im Bussystem definierten Funktionen, wie beispielsweise im Falle eines Ether- oder Internet über FTP, Telnet oder HTTP.

Ein weiterer Vorteil der Integration der Busmonitorfunktion in eine Busstation besteht darin, dass dadurch gewährleistet wird, dass dadurch eine negative Beeinflussung infolge veränderter elektrischer Kenngrößen des Gesamtsystems vermieden wird, da die jeweilige Busstation dauerhaft im System verbleibt. Weiterhin vorteilhaft erweist sich die Integration der Busmonitorfunktion in eine Busstation dadurch, dass dadurch, dass die Busstationen dauerhaft im System verbleiben auch Langzeitdiagnosen möglich werden, wodurch die Erforschung einer möglichen Fehlerursache möglich wird.

Um die mit Hilfe der erfindungsgemäßen integrierten Busmonitorfunktion gewonnenen Daten zu visualisieren, kann jede Busstation gemäß einer weiteren beispielhaften Ausführungsform der Erfindung einen Monitor oder ein Display umfassen, womit der registrierte Datenverkehr unmittelbar online oder auch offline zur Anzeige gebracht werden kann. Eine andere Möglichkeit, um auf die mit Hilfe der Busmonitorfunktion gewonnenen Daten zurückgreifen zu können, besteht darin, bei einer weiteren beispielhaften Ausführungsform der Erfindung mit Hilfe der Kommunikationssoftware über das Bussystem auf den Datenbestand zurückzugreifen. Dieser Rückgriff auf den Datenbestand erfolgt vorzugsweise über die im Bussystem definierten Funktionen, wie beispielsweise im Falle eines Ether-oder Internet über FTP, Telnet oder HTTP.

Durch diese Funktionen ist es möglich, auf die gewonnenen Monitordaten über mehrere Kommunikationsebenen hinweg zuzugreifen. Für Feldgeräte, die neben der Busschnittstelle zusätzlich über eine weitere Schnittstelle, wie beispielsweise eine Konfigurationsschnittstelle, verfügen, besteht die Möglichkeit, die aufgezeichneten Monitordaten über diese weitere Schnittstelle auszulesen. Diese Ergänzung ermöglicht die Diagnose und Überwachung des Telegrammverkehrs der jeweiligen Busstation mit dem Bussystem auch dann, wenn keine Kommunikation zwischen Bussystem und Busstation, beispielsweise wegen einer beschädigten Datenleitung, zustande kommt.

Die Visualisierung der mit Hilfe der Busmonitorfunktion gewonnenen (gespeicherten) Daten kann alternativ gemäß einer weiteren beispielhaften Ausführungsform der Erfindung in einer für den Anwender verständlichen Form (z.B. Text- oder HTML-Datei) und/oder gemäß einer bevorzugten beispielhaften anderen Ausführungsform der Erfindung auch in einer maschinenverständlichen Form (z.B. binäre Codierung) erfolgen. Diese unterschiedlichen Arten der Visualisierung erweisen sich besonders vorteilhaft dadurch, dass je nach Anwenderzielgruppe unterschiedliche Darstellungsarten ausgewählt werden können. Bevorzugen Spezialisten in der Regel eine maschinenlesbare Darstellung, bei der der auftretenden Datenverkehr auf dem Bussystem Byte für Byte in maschinenlesbarer Darstellung eingelesen und als Hexadezimalzahlen dargestellt werden, bevorzugen Servicetechniker üblicherweise eine verständlichere Darstellung, bei der die Telegramme zum einen klar getrennt in Anfragen und Antworten, zum anderen "übersetzt", d.h. für den Anwender in verständlicher Form, beispielsweise als Text oder HTML-Datei dargestellt werden.

Bei Bedarf umfassen die erfindungsgemäßen Busstationen gemäß einer bevorzugten beispielhaften weiteren Ausführungsform der Erfindung weiterhin in ihrer jeweiligen Busmonitoreinrichtung einen Filter, mit dem die erfassten Daten gefiltert werden. Durch eine derartige Filterfunktion wird die gezielte Darstellung bestimmter Telegrammtypen (d.h. unter Anwendung eines Befehlsfilters) oder die Darstellung von Telegrammen bestimmter Geräte (d.h. unter Anwendung eines Adressfilters) ermöglicht. Durch geeignete Filterabfragen ist die Busmonitorfunktion weiterhin in der Lage, die aufgezeichneten Telegramme auf Vollständigkeit bzw. Gültigkeit zu überprüfen und im Fehlerfall dem Anwender durch eine geeignete Darstellung zu signalisieren, dass bestimmte Telegramme ungültig sind. Für diese Fälle existieren geeignete Filterfünktionen, so dass beispielsweise nur ungültige Telegramme zur Anzeige kommen. Um die nur wirklich relevanten Telegramme auszufiltern, ist es weiterhin möglich, die erfassten Telegramme mit Hilfe logischer Und-, Und-/Oder-oder Oder-Kombinationen der Filterregeln auszufiltern, was prinzipiell sowohl im Online- oder als auch im Offline-Betrieb möglich ist.

Wie eingangs bereits erwähnt, wird daher durch eine derartige Filterfunktionalität das durch die Busmonitorfunktion erzeugte Datenaufkommen eingeschränkt und damit ein Online-Monitoring ermöglicht. Durch die Filterfunktion wird es somit beispielsweise ermöglicht, nur die bei der Busstation fehlerhaft ankommenden Telegramme aufzuzeichnen, um diese während des laufenden Betriebs online dem Anwender zugänglich zu machen.

Um mit Hilfe der Busmonitorfunktion ein Langzeitmonitoring des Bussystems zu ermöglichen, umfasst die Busmonitoreinrichtung der Busstation gemäß einer beispielhaften weiteren Ausführungsform der Erfindung einen genügend großen Telegrammspeicher, in dem die erfassten Telegramme abgelegt werden. Da die Busstation aufgrund ihrer primären Funktion im System verbleibt, ist somit eine Langzeitüberwachung möglich. Die während des Betriebs auftretenden Fehler werden aufgezeichnet und können dann zu einem späteren Zeitpunkt direkt am Busteilnehmer, über das Bussystem, an dem die Busstation angeschlossen ist, über ein übergeordnetes Bussystem, oder über eine weitere Schnittstelle der Busstation ausgelesen werden.

### KURZE BESCHREIBUNG DER ZEICHNUNGEN

Im Folgenden ist zum besseren Verständnis und zur weiteren Erläuterung der vorliegenden Erfindung der technische Hintergrund der Erfindung und ein Ausführungsbeispiel der Erfindung unter Bezugnahme auf die beigefügten Zeichnungen näher beschrieben.
- Fig. 1: zeigt den Aufbau eines Bussystems
- Fig. 2: zeigt ein mit einem Busmonitor überwachtes Bussystem.
- Fig. 3: zeigt die Anbindung des Busmonitors der Fig. 2 mit einem Schnittstellenwandler.
- Fig. 4: zeigt den Aufbau eines Busmonitors
- Fig. 5: zeigt den Aufbau eines Gateways
- Fig. 6: zeigt den Aufbau eines Sensors bzw. eines Aktors
- Fig. 7: zeigt den Aufbau eines Bussystems mit in die Busstationen erfindungsgemäß integrierter Busmonitorfunktion.
- Fig. 8: zeigt den Aufbau eines Gateways mit integrierter Funktion gemäß der vorliegenden Erfindung.
- Fig. 9: zeigt den Aufbau eines Sensors bzw. eines Aktors mit integrierter Busmonitorfunktion gemäß der vorliegenden Erfindung.
- Fig. 10 a - c: zeigt mögliche Darstellungen der Monitordaten.
- Fig. 11: zeigt eine Benutzeroberfläche zur Definition von Filterkriterien.

In allen Figuren hinweg sind gleiche Einheiten und Funktionen mit übereinstimmenden Bezugszeichen gekennzeichnet.

### BESCHREIBUNG EINES AUSFÜHRUNGSBEISPIELS DER VORLIEGENDEN ERFINDUNG

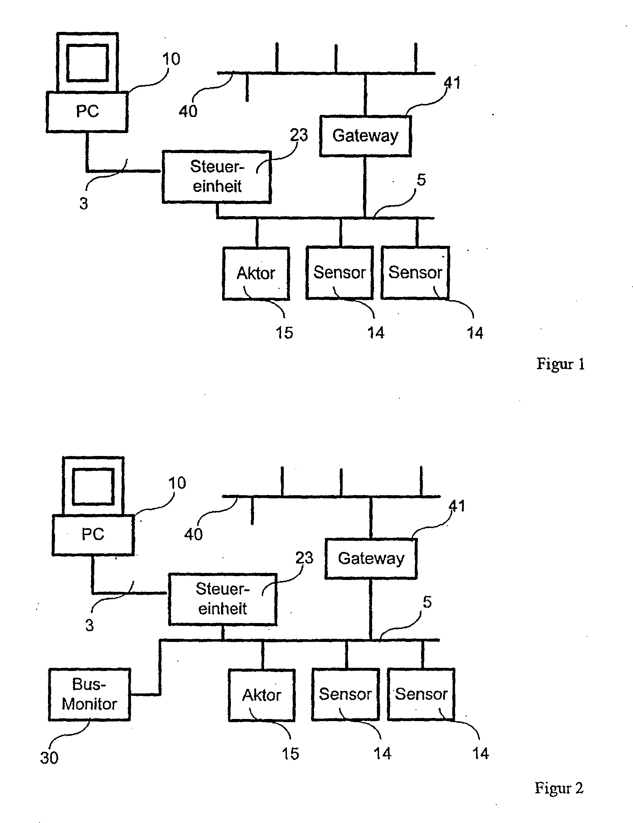

Fig. 1 zeigt den grundsätzlichen Aufbau eines ersten digital kommunizierenden Bussystems 5 mit einer Steuereinheit 23, Sensoren 14 sowie einem Aktor 15, die jeweils über das digital kommunizierende Bussystem 5 mit der Steuereinheit 23 verbunden sind. Als Steuereinheit 23 kann hier jede beliebige Speichel-programmierbare Steuerung (SPS) oder ganz speziell, beispielsweise die Auswertzentrale VEGALOG 571 der Firma VEGA Grieshaber KG verwendet werden. Als erstes Bussystem 5 kann hier jedes beliebige Bussystem, wie beispielsweise Fieldbus Foundation oder Hart verwendet werden, als besonders geeignet erweisen sich jedoch der Profibus PA bzw. der VBUS der Firma VEGA Grieshaber K.G. In dieser Ausführungsform verfügt die Steuereinheit 23 über eine Konfigurationsschnittstelle 3, an die hier ein Konfigurationsrechner 10 angeschlossen ist. Der Konfigurationsrechner 10 ist ein gewöhnlicher PC oder kann auch ein spezielles Konfigurationsgerät sein.

Das erste Bussystem 5 ist hier optional mit einem zweiten Bussystem 40 über ein Gateway 41 erweitert. Das zweite Bussystem 40 stellt in Bezug auf das erste Bussystem 5 ein überlagertes Netzwerk, wie z.B. ein Ethernet oder Internet dar. Diesem zweiten Bussystem 40 wird es ermöglicht, über das Gateway 41 auf die Steuereinheit 23 oder auf die Sensoren 14 oder die Aktoren 15 des ersten Bussystems 1 zuzugreifen. Als mögliche Variante ist es bekannt, die Steuereinheit 23 mit dem Gateway 41 in einem Gerät zu kombinieren.

Treten in einem derartigen System Probleme bei der Kommunikation zwischen einem oder mehreren Sensoren 14, Aktoren 15 und/oder der Steuereinheit 23 auf, so ist die Analyse eines derartigen Problems mit erheblichem Aufwand verbunden, sofern der dem Problem zugrunde liegende Fehler überhaupt aufgefunden werden kann. In einem solchen Fall kann ein herkömmliches Multimeter nur noch sehr bedingt Informationen über die Ursache der fehlerhaften Kommunikation liefern. Üblicherweise wird in solch einem Falle die Fehlerursache mit Hilfe externer Geräte, die an das Bussystem 5 oder 40 angeschlossen werden, diagnostiziert. Diese Geräte zur Überwachung eines Bussystems werden auch als Busmonitore bezeichnet. Die Fig. 2 zeigt exemplarisch das System der Fig. 1, das um solch einen Busmonitor 30 erweitert ist. Der Busmonitor 30 stellt hier ein zusätzliches externes und passives Gerät dar, das an das Bussystem 5 zusätzlich angeschlossen ist.

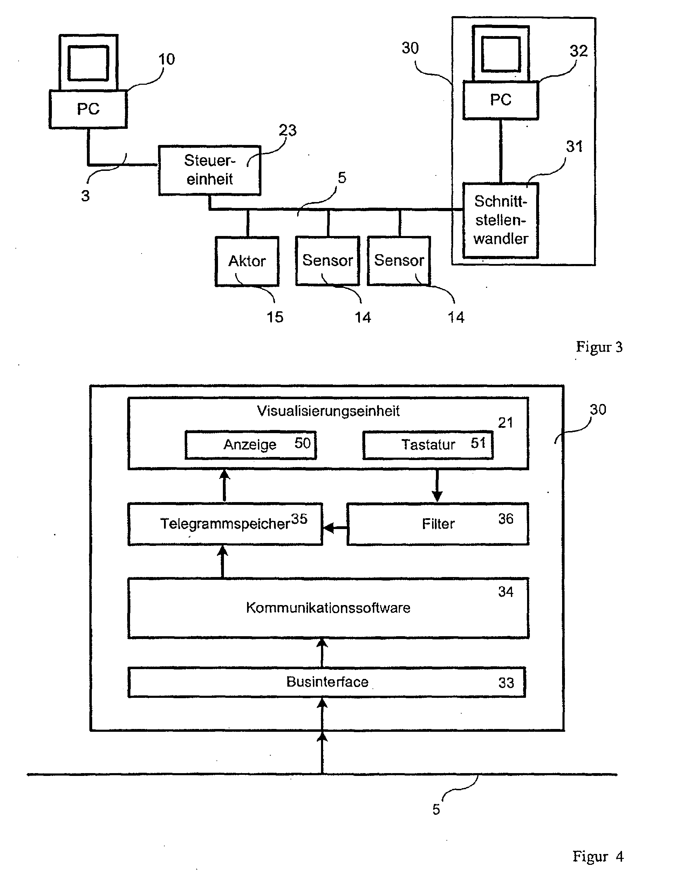

Im Gegensatz zu den Busstationen 14, 15, 23 nimmt der Busmonitor 30 nicht aktiv an der Datenkommunikation teil. Seine Aufgabe besteht vielmehr darin, jeglichen Datenverkehr auf dem Bussystem mitzuhören und diesen in einem dafür vorgesehenen Speicher abzulegen. Um den so registrierten Datenverkehr sichtbar zu machen, verfügt der Busmonitor 30 üblicherweise über ein eigenes Display oder einen Monitor. Wie in Fig. 2 dargestellt, ist der Busmonitor 30 ein komplett eigenständiges Gerät. Der Busmonitor 30 kann jedoch ebenfalls auch nur als PC-Einsteckkarte oder als Schnittstellenwandler zum Anschluss an beispielsweise eine RS 232-Schnittstelle (COM-Schnittstelle) eines PCs ausgeführt sein. Die Fig. 3 zeigt eine derartige Anordnung mit einem über eine Schnittstelle (z.B. RS 232) an einen PC 32 angeschlossenen Schnittstellenwandler 31. In diesem Falle fungiert der PC 32 zusammen mit dem Schnittstellenwandler 31 als Busmonitor 30.

Wie aus den vorangehenden Figuren zu erkennen ist, werden die Busmonitore 30 stets an das bestehende System extern als zusätzliche Geräte angeschlossen. Diese Geräte weisen häufig den ungünstigen Nebeneffekt auf, das Bussystem in irgend einer Weise zu beeinflussen. Mit diesen externen Busmonitoren sind Langzeitdiagnosen jedoch nicht möglich, da die Busmonitore 30 nicht ständig im System verbleiben können. Eine Fehlerursachenforschung ist daher häufig nicht möglich, da die Busmonitore 30 zum Fehlerzeitpunkt meist nicht im System eingebaut sind. Hinzu kommt, dass ein externer Busmonitor 30 jeweils nur den Datenverkehr, der auf der Datenleitung des Bussystems abläuft, registrieren kann. Den Datenverkehr, der hinter den Schnittstellen der Busstationen 14, 15 und 23 an das Bussystem erfolgt, kann ein externer Busmonitor nicht erkennen.

Die Fig. 4 zeigt ein Funktionsschaubild eines gewöhnlichen Busmonitors 30. Der Busmonitor 30 umfasst ein Businterface 33, eine Kommumkationssoftware 34, einen Telegrammspeicher 35, einen Filter 36 und eine Visualisierungseinheit 21 mit einer Anzeige 50 und einer Tastatur 51. Der Busmonitor 30 ist über das Businterface 33 an ein bestehendes Bussystem 5 angeschlossen. Um den Datenverkehr auf dem Bussystem 5 zu registrieren, greift der Busmonitor 30 über das Businterface 33 mittels der Kommunikationssoftware 34 auf diesen Datenverkehr zu. Der so registrierte Datenverkehr wird dann in einem Telegrammspeicher 35 abgelegt oder kann auch direkt online mit Hilfe der Visualisierungseinheit 21 bzw. der Anzeige 50 optisch dargestellt zur Anzeige gebracht werden. Alternativ kann auf die so gewonnenen Daten jeweils einen Filter 36 angewendet werden, um die zu speichernde Datenmenge zu begrenzen.

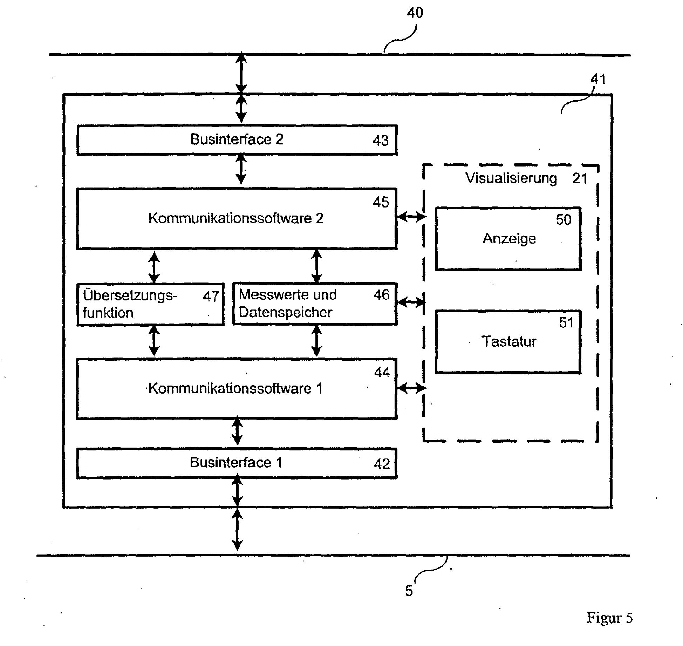

Die Fig. 5 zeigt ein Funktionsschaubild eines Gateways 41, das, um die Kommunikation zwischen zwei Bussystemen 5, 40 zu gewährleisten, zwischen diese beiden Systeme eingeschaltet ist. Das Gateway 41 umfasst ein erstes Businterface 42 und ein zweites Businterface 43, eine erste Kommunikationssoftware 44 und eine zweite Kommunikationssoftware 45, einen Messwerte- und Datenspeicher 46 sowie eine Funktionalität 47, die den Datenverkehr der beiden, meist nicht kompatiblen Bussysteme 5, 40 übersetzt. Um über das Bussystem 40 auf den Datenverkehr auf dem Bussystem 5 zugreifen zu können, greift die Kommunikationssoftware 45 über die erste Kommunikationssoftware 44 und das erste Businterface 42 auf die Daten auf dem Bussystem 5 zu. Dieser Datenverkehr wird über das erste Businterface 42 mit Hilfe der ersten Kommunikationssoftware 44 registriert. Der so registrierte Datenverkehr wird mit Hilfe der Übersetzungsfunktion 47 in ein für das Bussystem 40 verständliches Format transformiert und von der zweiten Kommunikationssoftware 45 über das Businterface 43 dem Bussystem 40 mitgeteilt. Alternativ umfasst das Gateway 41 eine Visualisierungseinheit 21 mit einer Tastatur 51 und einer Anzeige 50 zur Darstellung von Prozessdaten.

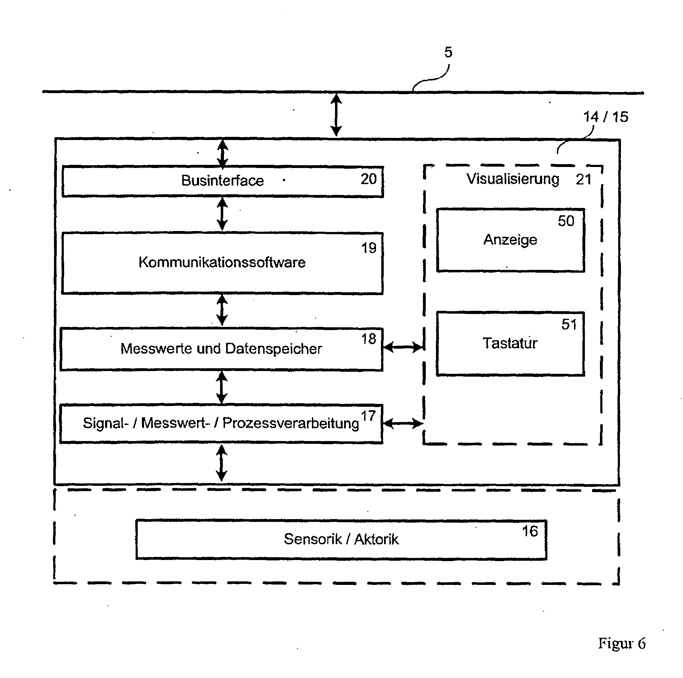

Die Fig. 6 zeigt den prinzipiellen Aufbau in Form eines Funktionsschaubildes eines Sensors 14 oder Aktors 15. Der Sensor 14 bzw. Aktor 15 umfasst eine Sensorik bzw. Aktorik 16, eine Signal- bzw. Prozessverarbeitungseinheit 17, einen Messwerte- und Datenspeicher 18, eine Kommunikationssoftware 19 und ein Businterface 20. Beispielsweise im Falle eines Sensors 14 empfangt die Sensorik 16 ein weiter zu verarbeitendes Signal. Dieses Signal wird von der Signal- und Prozessverarbeitungseinheit 17 weiterverarbeitet und beispielsweise in eine für die Kommunikationssoftware 19 verständliches Format transformiert. Die so transformierten Daten können möglicherweise von dem Messwerte- und Datenspeicher 18 zwischengespeichert werden. Anschließend werden die transformierten Daten von der Kommunikationssoftware 19 über das Businterface 20 dem Bussystem 5 mitgeteilt. Alternativ umfasst der Sensor 14 bzw. der Aktor 15 eine Visualisierungseinheit 21 mit einer Tastatur 51 und einer Anzeige 50 zur Darstellung von Prozessdaten.

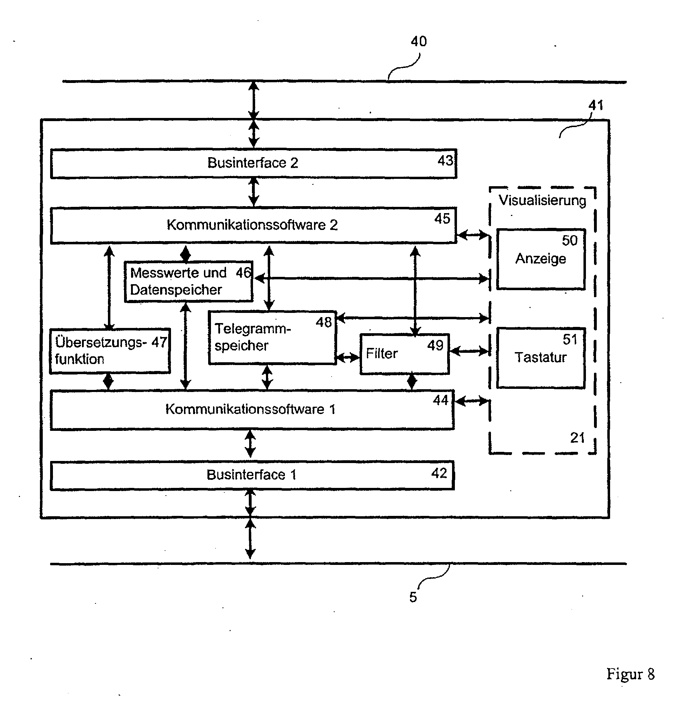

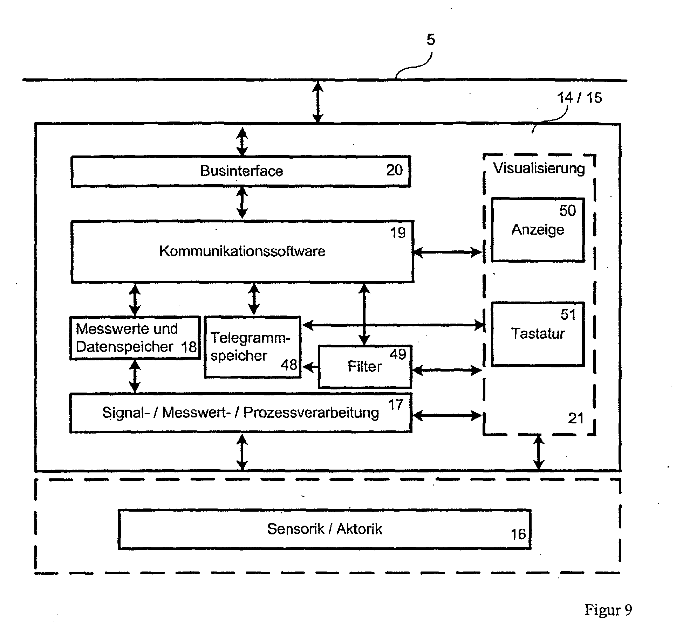

Der Erfindung liegt nun der Gedanke zu Grunde, die primäre Funktionalität des Gateways 41 der Fig. 5 oder des Sensors 14 bzw. Aktors 15 gemäß Fig. 6 mit der Funktion eines Busmonitors 30 gemäß Fig. 4 zu einem neuen Gerät mit kombinierter Funktionalität mit Gateway und Busmonitorfunktion gemäß Fig. 8 oder Sensor bzw. Aktor und Busmonitorfunktion gemäß Fig. 9 zu kombinieren.

Gemäß der Erfindung nutzen die Geräte Systemsteuereinheit 23, Sensor 14, Aktor 15 oder Gateway 41, die im Rahmen der vorliegenden Erfindung als Busstationen bezeichnet werden, ihre systembedingten Hardwarekomponenten und hierbei vor allem das jeweilige Businterface nicht nur zur primären Aufgabe des Datenaustausches von Prozessdaten und Messwerten, sondern sie nutzen die gleichen Hardwarekomponenten und hierbei insbesondere das jeweilige Businterface zur Realisierung einer sekundären Aufgabe, nämlich der Busmonitorfunktion. Die Realisierung der Busmonitorfunktion wird dabei in den Busstationen durch eine Erweiterung der Busstationen um jeweils eine Busmonitoreinrichtung 30 bewerkstelligt.

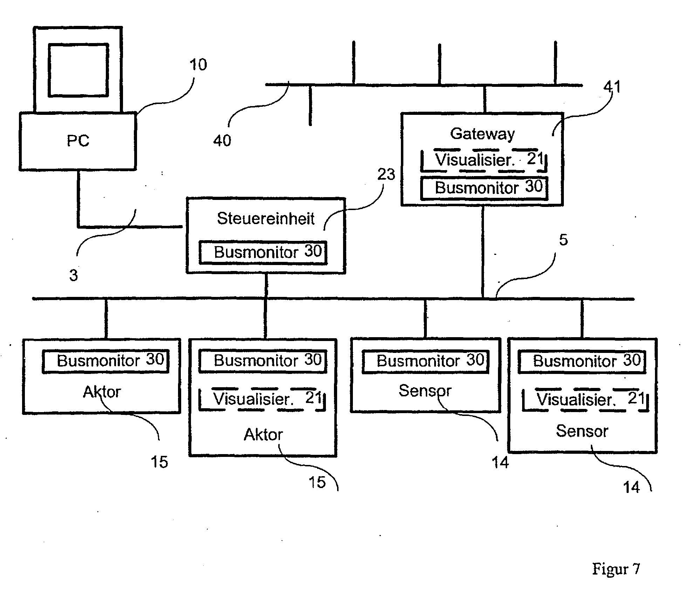

Die Fig. 7 zeigt den grundsätzlichen Aufbau eines ersten digital kommunizierenden Bussystems 5 mit einer Steuereinheit 23, Sensoren 14 sowie Aktoren 15, die jeweils über das digital kommunizierende Bussystem 5 mit der Steuereinheit 23 verbunden sind. Optional ist das Bussystem 5 an ein zweites Bussystem 40 über das Gateway 41 gekoppelt. Als Steuereinheit 23 kann hier jede beliebige speicherprogrammierbare Steuerung (SPS) oder ganz speziell, beispielsweise die Auswertzentrale VEGALOG 571 der Firma VEGA Grieshaber KG, Deutschland verwendet werden. Als erstes Bussystem 5 kann hier jedes beliebige Bussystem, wie beispielsweise Fieldbus Foundation oder Hart verwendet werden, als besonders geeignet erweisen sich jedoch der Profibus PA bzw. der VBUS der Firma VEGA Grieshaber KG, Deutschland.

Erfindungsgemäß umfassen die Steuereinheit 23, die Sensoren 14, die Aktoren 15 sowie das Gateway 41 jeweils eine integrierte Busmonitoreinrichtung 30. Das System der Fig. 7 entspricht somit dem System der Fig. 1 mit Ausnahme der erfindungsgemäßen Erweiterung der Busstationen Steuereinheit 23, Sensor 14, Aktor 15 und Gateway 41, um jeweils die Busmonitoreinrichtung 30.

In dieser Ausführungsform verfügt die Steuereinheit 23 über eine Konfigurationsschnittstelle 3, an die hier ein Konfigurationsrechner 10 angeschlossen ist. Der Konfigurationsrechner 10 kann ein gewöhnlicher PC oder auch ein spezielles Konfigurationsgerät sein. Im Rahmen der vorliegenden Erfindung erweißt es sich jedoch als besonders zweckmäßig, eine derartige Konfigurationsschnittstelle auch bei den anderen Busstationen 14, 15,41 vorzusehen. Eine derartige Konfigurationsschnittstelle erlaubt es, wenn beispielweise der Kontakt von einer Busstation 14, 15, 41 wegen einer beschädigten Datenleitung zum Bussystem selbst nicht herstellbar ist, die gewonnen Monitordaten auszulesen.

Das erste Bussystem 5 ist hier optional mit einem zweiten Bussystem 40 über ein Gateway 41 erweitert. Das zweite Bussystem 40 stellt in Bezug auf das erste Bussystem 5 ein überlagertes Netzwerk, wie z.B. ein Ethernet oder Internet dar. Diesem zweiten Bussystem 40 wird es ermöglicht, über das Gateway 41 auf die Steuereinheit 23 oder auf die Sensoren 14 oder die Aktoren 15 des ersten Bussystems 5 zuzugreifen. Als mögliche Variante ist es bekannt, die Steuereinheit 23 mit dem Gateway 41 in einem Gerät zu kombinieren.

Über eine derartige Vernetzung der einzelnen Busstationen 14, 15, 41 untereinander und selbst über mehrer Ebenen 5, 40 hinweg wird es ermöglicht, die mittels der integrierten Busmonitoreinrichtungen 30 gewonnen Daten für das gesamte System zur Verfügung zu stellen. Alle an einer beliebigen Stelle gewonnen Monitordaten sind an jedem beliebigen Ort des Systems und zu jeder beliebigen Zeit verfügbar. Der Zugriff auf die Monitordaten erfolgt über die systemimmanenten Funktionen, wie im Falle eines Ether- oder Internetzes beispielweise über FTP, Telnet oder HTTP. Mit Hilfe dieser Funktionen wird der Zugriff über mehrere Kommunikationsebenen hinweg ermöglicht.

Da die Monitordaten über die Kommunikationssoftware der jeweils angesprochenen Busstation abgerufen werden können, ist es beispielweise möglich, über das Bussystem 40, über das Gateway 41, über das Bussystem 5 mit dem Sensor 14 oder dem Aktor 15 ein Monitoring auszuführen und zwar so wie der Sensor 14 oder Aktor 15 die Telegramme des Bussystems 5 empfängt. Eine Beeinflussung des Bussystems 5 findet nicht statt, da der Sensor 14 oder der Aktor 15 auch im "normalen" Betrieb im System vorhanden ist.

Ebenso kann auch der umgekehrte Weg beschritten werden, indem über die Steuereinheit 23, über das Bussystem 5 aus dem Gateway 41 ein Monitoring des Bussystems 40 durchgeführt wird. Daraus ergibt sich dann die Möglichkeit an einem nicht am Bussystem funktionierenden Teilnehmer die Störungsursache zu finden.

Die Fig. 8 zeigt ein Funktionsschaubild eines Gateways 41, das, um die Kommunikation, zwischen zwei Bussystemen 5,40 zu gewährleisten, zwischen diese beiden Systeme eingeschaltet ist und das um die erfindungsgemäße Busmonitoreinrichtung erweitert ist. Das Gateway umfasst ein erstes Businterface 42 und ein zweites Businterface 43, eine erste Kommunikationssoftware 44 und eine zweite Koznmunücationssoftware 45, einen Messwerte- und Datenspeicher 46 sowie eine Funktionalität 47, die den Datenverkehr der beiden, meist nicht kompatiblen Bussysteme 5, 40 übersetzt. Des weiteren ist das Gateway 41 um einen Datenfilter 49 und einen Telegrammspeicher 48 erweitert. Um über das Bussystem 40 auf den Datenverkehr auf dem Bussystem 5 zugreifen zu können, greift die Kommunikationssoftware 45 über die erste Kommunikationssoftware 44 und das erste Businterface 42 auf die Daten auf dem Bussystem 5 zu . Dieser Datenverkehr wird über das erste Businterface 42 mit Hilfe der ersten Kommunikationssoftware 44 registriert. Der so registrierte Datenverkehr wird mit Hilfe der Übersetzungsfunktion 47 in ein für das Bussystem 40 verständliches Format transformiert und von der zweiten Kommunikationssoftware 45 über das Businterface 43 dem Bussystem 40 mitgeteilt.

Gemäß der Erfindung ist es nun möglich mit dem Gateway 41 ein Monitoring der Bussysteme 5, 40 oder des Gateway selbst durchzuführen. Um den Telegrammverkehr auf dem Bussystem 5 oder 40 zu registrieren, greift das Gateway 41 über das Businterface 42 oder 43 mittels der Kommunikationssoftware 44 oder 45 auf diesen Telegrammverkehr zu. Der so registrierte Datenverkehr wird dann möglicherweise gefiltert in dem Telegrammspeicher 48 abgelegt oder kann auch direkt online mit der Visualisierungseinheit 21 bzw. mit der Anzeige 50 optisch dargestellt werden.

Die Fig. 9 zeigt den prinzipiellen Aufbau eines Sensors 14 oder Aktors 15 in Form eines Funktionsschaubildes gemäß der vorliegenden Erfindung. Der Sensor 14 bzw. Aktor 15 umfasst eine Sensorik bzw. Aktorik 16, eine Signal- bzw. Prozessverarbeitungseinheit 17, einen Messwerte- und Datenspeicher 18, eine Kommunikationssoftware 19 und ein Businterface 20. Des weiteren ist der Sensors 14 oder der Aktor 15 um einen Datenfilter 49 und einen Telegrammspeicher 48 erweitert. Beispielsweise im Falle eines Sensors 14 empfängt die Sensorik 16 ein weiter zu verarbeitendes Signal. Dieses Signal wird von der Signal- und Prozessverarbeitungseinheit 17 weiterverarbeitet und beispielsweise in eine für die Kommunikationssoftware 19 verständliches Format transformiert. Die so transformierten Daten können möglicherweise von dem Messwerte- und Datenspeicher 18 zwischengespeichert werden. Anschließend werden die transformierten Daten von der Kommunikationssoftware 19 über das Businterface 20 dem Bussystem 5 mitgeteilt.

Gemäß der Erfindung ist es nun möglich mit dem Sensor 14 oder dem Aktor 15 ein Monitoring der Bussysteme 5 oder des Sensors 14 oder des Aktors 15 selbst durchzuführen. Um den Datenverkehr auf dem Bussystem 5 zu registrieren, greift der Sensor 14 oder Aktor 15 über das Businterface 20 mittels der Kommunikationssoftware 19 auf diesen Datenverkehr zu. Der so registrierte Datenverkehr wird dann möglicherweise gefiltert in dem Telegrammspeicher 48 abgelegt oder kann auch direkt online mit der Visualisierungseinheit 21 bzw. mit der Anzeige 50 optisch dargestellt werden.

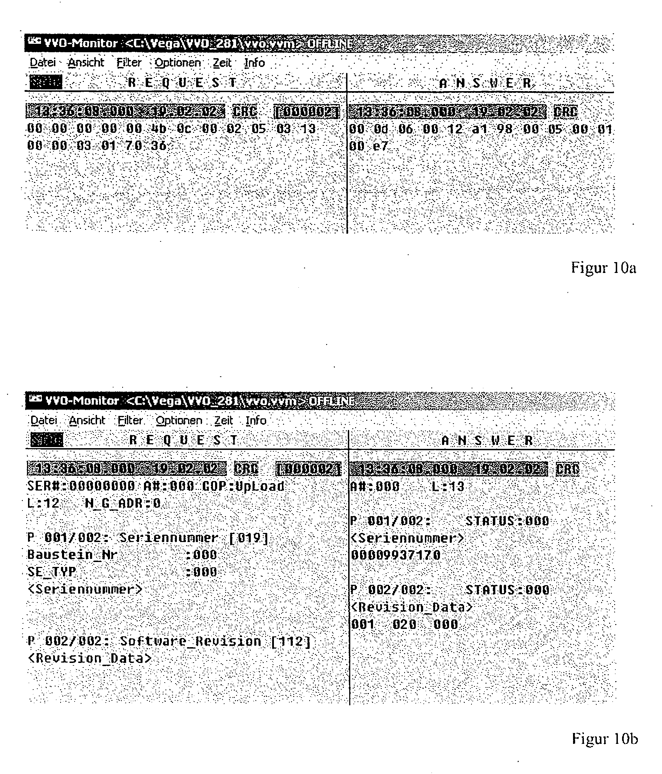

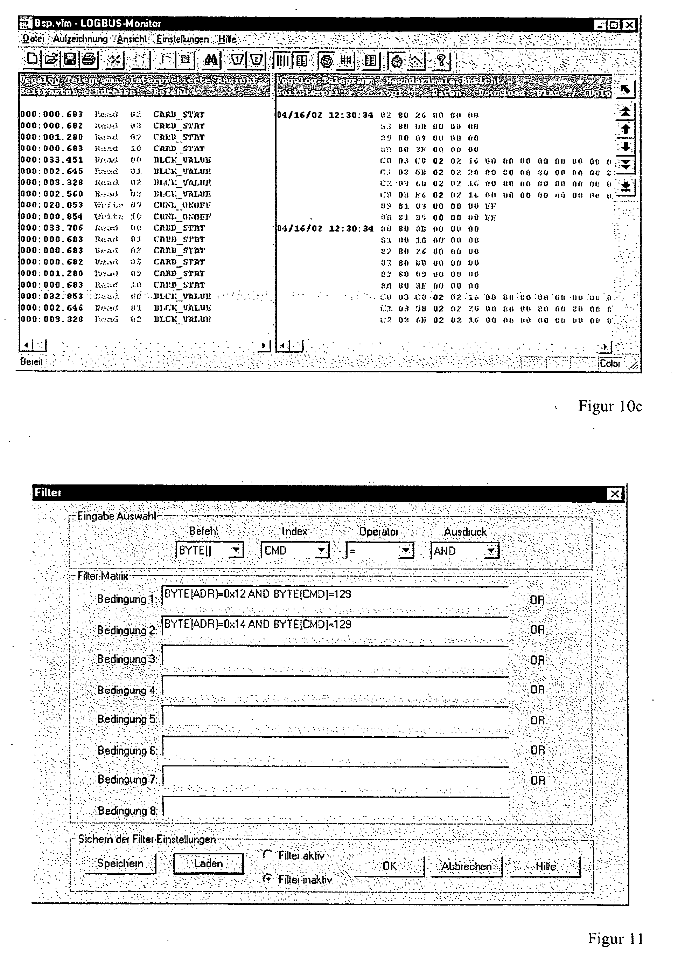

Die Fig. 10 a - c zeigen verschiedene mögliche Darstellungen der Monitordaten, die mit Hilfe der integrierten Busmonitorfunktion gewonnen worden sind. Wie bereits erwähnt kann die Visualisierung der mit Hilfe der Busmonitorfunktion gewonnenen (gespeicherten) Daten alternativ in einer für den Anwender verständlichen Form (z.B. Text- oder HTML-Datei) und/oder gemäß einer bevorzugten beispielhaften anderen Ausführungsform der Erfindung auch in einer maschinenverständlichen Form (z.B. binäre Codierung) erfolgen. Die Fig. 10a zeigt den durch die Monitorfunktion erfassten Datenverkehr, der von einem Bussystem Byte für Byte eingelesen wurde, in einer hexadezimalen Zahlendarstellung getrennt in Anfragen (request) und Antworten (answer) zu einem bestimmten Zeitpunkt. Eine verständlichere Darstellung der Monitordaten zeigt die Fig. 10b, in der die erfassten Daten in einer "übersetzten" Form visualisiert sind. Da je nach Anwenderzielgruppe unterschiedliche Darstellungsarten bevorzugt werden, kann zwischen den Darstellungen der Fig. 10a und der Fig. 10b umgeschaltet werden. Eine weitere Möglichkeit der Darstellung zeigt die Fig. 10c. Hier sind die beiden Darstellungsarten der Fig. 10a und 10b miteinender kombiniert, indem sowohl die hexadezimale wie auch die "übersetzte" Darstellung parallel nebeneinender zur Anzeige gebracht werden.

Die Fig. 11 zeigt eine Benutzeroberfläche zur Definition von Filterkriterien, um nur bestimmte Daten zu erfassen. Mit Hilfe dieser Benutzeroberfläche können bestimmte Filterbedingungen, wie beispielsweise Befehlsfilterbedingungen und/oder Adressfilterbedingungen, definiert werden (Bedingungen 1 bis 8), die untereinander mit logischen Operatoren beliebig miteinander kombiniert werden können, wobei jede Filterbedingung (beispielsweise Bedingung 1) nochmals aus mehreren Bedingungen, die wiederum logisch miteinander verknüpft sind, bestehen kann.

Gemäß einem exemplarischen Ausführungsbeispiel der vorliegenden Erfindung wird eine Busstation (14; 15; 23) geschaffen, die eine primäre Funktionalität wie beispielsweise eine Sensorfunktion hat und an ein Bussystem (5; 40) ankoppelbar ist, mit:
- zumindest einem Businterface (42; 43) zur Kommunikation der Busstation (14; 15; 23) mit dem Bussystem (5; 40) und
- einer in der Busstation (14; 15; 23) integrierten Busmonitoreinrichtung (30), die mit dem Businterface (42; 43) gekoppelt ist und der Busstation (14; 15; 23) eine sekundäre Funktionalität verleiht, indem die Busmonitoreinrichtung (30) über das Businterface (42; 43) zumindest die Kommunikation der Busstation (14; 15; 23) mit dem Bussystem (5; 40) oder die interne Kommunikation in der Busstation (14; 15; 23) überwacht.

Gemäß einem weiteren exemplarischen Ausführungsbeispiel der vorliegenden Erfindung wird eine Busstation geschaffen
wobei die Busmonitoreinrichtung (30) dem Bussystem (5; 40) Monitordaten zur Verfügung stellt und/oder Monitordaten aus dem Bussystem (5; 40) empfängt.

Gemäß noch einem weiteren exemplarischen Ausführungsbeispiel der vorliegenden Erfindung wird eine Busstation geschaffen,
wobei die Busmonitoreinrichtung (30) auf Datentelegramme des Bussystems (5; 40) zugreift und diese in Form von Monitordaten erfasst, um diese anschließend dem Bussystem (5; 40) wieder zur Verfügung zu stellen, wodurch die Busstation (14; 15; 23) die Funktionalität eines Busmonitors hat.

Gemäß einem anderen exemplarischen Ausführungsbeispiel der vorliegenden Erfindung wird eine Busstation geschaffen,
wobei die Busmonitoreinrichtung (30) auf Daten der Busstation (14; 15; 23) zugreift und diese in Form von Monitordaten erfasst, um diese anschließend dem Bussystem (5; 40) wieder zur Verfügung zu stellen, wodurch die Busstation (14; 15; 23) die Funktionalität eines Busmonitors hat.

Gemäß einem weiteren exemplarischen Ausführungsbeispiel der vorliegenden Erfindung wird eine Busstation geschaffen,
wobei die Busmonitoreinrichtung (30) eine Programmeinheit umfasst, die auf die Datentelegramme des Bussystems (5; 40) als auch auf die Daten der Busstation (14; 15; 23) selbst zugreift und diese weiter verarbeitet.

Gemäß noch einem weiteren exemplarischen Ausführungsbeispiel der vorliegenden Erfindung wird eine Busstation geschaffen,
wobei die Busmonitoreinrichtung (30) zumindest einen Filter umfasst, der die erfassten Monitordaten nach bestimmten Filterkriterien auswertet.

Gemäß einem weiteren exemplarischen Ausführungsbeispiel der vorliegenden Erfindung wird eine Busstation geschaffen,
wobei der Filter ein Befehlsfilter ist.

Gemäß noch einem weiteren exemplarischen Ausführungsbeispiel der vorliegenden Erfindung wird eine Busstation geschaffen,
wobei der Filter ein Adressfilter ist.

Gemäß einem anderen exemplarischen Ausführungsbeispiel der vorliegenden Erfindung wird eine Busstation geschaffen,
wobei der Filter ein kombinierter Befehls-Adressfilter ist.

Gemäß einem weiteren exemplarischen Ausführungsbeispiel der vorliegenden Erfindung wird eine Busstation geschaffen,
wobei die Busmonitoreinrichtung (30) einen Telegrammspeicher umfasst, in dem die erfassten Monitordaten gespeichert werden.

Gemäß noch einem weiteren exemplarischen Ausführungsbeispiel der vorliegenden Erfindung wird eine Busstation geschaffen,
wobei die durch die Busmonitoreinrichtung (30) erfassten Monitordaten dem Bussystem (5; 40) zur Weiterverarbeitung über das Businterface (42; 43) dem Bussystem (5; 40) zur Verfügung gestellt werden.

Gemäß einem anderen exemplarischen Ausführungsbeispiel der vorliegenden Erfindung wird eine Busstation geschaffen,
wobei die Busstation (14, 15; 23) eine weitere Schnittstelle umfasst, über die die durch die Busmonitoreinrichtung (30) erfassten Monitordaten zur Weiterverarbeitung von einem externen Auswertesystem ausgelesen werden.

Gemäß einem anderen exemplarischen Ausführungsbeispiel der vorliegenden Erfindung wird eine Busstation geschaffen,
wobei die Busminitoreinrichtung (30) einen Monitor (21) oder ein Display zur Visualisierung der Monitordaten umfasst.

Gemäß noch einem weiteren exemplarischen Ausführungsbeispiel der vorliegenden Erfindung wird eine Busstation geschaffen,
wobei die Monitordaten online auswertbar sind.

Gemäß einem weiteren exemplarischen Ausführungsbeispiel der vorliegenden Erfindung wird eine Busstation geschaffen,
wobei die Monitordaten offline auswertbar sind.

Gemäß einem weiteren exemplarischen Ausführungsbeispiel der vorliegenden Erfindung wird eine Busstation geschaffen,
wobei die Busmonitoreinrichtung (30) die gewonnen Monitordaten selbsttätig anderen Busstationen (14; 15; 23) oder an ein Auswertesystem weiterleitet.

Gemäß noch einem weiteren exemplarischen Ausführungsbeispiel der vorliegenden Erfindung wird eine Busstation geschaffen,
wobei die Busstation ein Sensor (14) oder ein Aktor (15) ist.

Gemäß einem weiteren exemplarischen Ausführungsbeispiel der vorliegenden Erfindung wird eine Busstation geschaffen,
wobei die Busstation eine Steuereinheit (23) zum Einlesen der Prozessdaten der Sensorik und zum Ausgeben von Prozessdaten zur Aktorik ist.

Gemäß einem weiteren exemplarischen Ausführungsbeispiel der vorliegenden Erfindung wird eine Busstation geschaffen,
wobei die Steuereinheit (23) eine speicherprogrammierbare Steuerung ist.

Gemäß einem anderen exemplarischen Ausführungsbeispiel der vorliegenden Erfindung wird eine Busstation geschaffen,
wobei die Busstation ein Gateway (41) ist, die zwei verschiedenartige Bussysteme (5; 40) miteinander verbindet.

Gemäß einem weiteren exemplarischen Ausführungsbeispiel der vorliegenden Erfindung wird eine Busstation geschaffen,
wobei die Busstation ein Bridge ist, die zwei gleichartige Bussysteme (5; 40) miteinander verbindet.

Gemäß einem exemplarischen Ausführungsbeispiel der vorliegenden Erfindung wird ein Netzwerk angegeben mit
- zumindest einem Bussystem (5; 40) und
- zumindest einer erfindungsgemäßen Busstation (14; 15; 23),
wobei das Netzwerk über die in der Busstation (14; 15; 23) integrierte Busmonitoreinrichtung (30) überwacht wird.

Gemäß einem weiteren exemplarischen Ausführungsbeispiel der vorliegenden Erfindung wird ein Verfahren zur Durchführung eines Monitorings eines Bussystems (5; 40) angegeben, bei dem eine erfindungsgemäße Busstation (14: 15; 23) an das Bussystem (5;40) angeschlossen wird und eine Überwachung des auf dem Bussystem (5: 40) ablaufenden Telegrammverkehrs aus der Busstation (14, 15; 23) heraus erfolgt.

Gemäß noch einem anderen exemplarischen Ausführungsbeispiel der vorliegenden Erfindung wird ein Verfahren angegeben,
wobei der Telegrammverkehr mit Hilfe einer in der Busstation (14; 15; 23) befindlichen Programmeinheit registriert und weiterverarbeitet wird.

## Patentansprüche

1. Busstation (14; 15; 23), die eine primäre Funktionalität zum Liefern von Prozessdaten in Form von Telegrammen hat und an ein Bussystem (5; 40) ankoppelbar ist, mit:
- zumindest einem Businterface (42; 43) zur Kommunikation der Busstation (14; 15; 23) mit dem Bussystem (5; 40) und
- einer in der Busstation (14; 15; 23) integrierten Busmonitoreinrichtung (30), die mit dem Businterface (42; 43) gekoppelt ist und der Busstation (14; 15; 23) eine sekundäre Funktionalität verleiht, indem die Busmonitoreinrichtung (30) über das Businterface (42; 43) einen auf dem Bussystem (5; 40) ablaufenden Telegrammverkehr überwacht;
wobei die Busstation (14, 15, 23) eingerichtet ist, mit einer anderen Busstation digital zu kommunizieren.

2. Busstation nach Anspruch 1,
wobei die Busmonitoreinrichtung (30) dem Bussystem (5; 40) Monitordaten zur Verfügung stellt und/oder Monitordaten aus dem Bussystem (5; 40) empfängt.

3. Busstation nach einem der voranstehenden Ansprüche,
wobei die Busmonitoreinrichtung (30) auf Datentelegramme des Bussystems (5; 40) zugreift und diese in Form von Monitordaten erfasst, um diese anschließend dem Bussystem (5; 40) wieder zur Verfügung zu stellen, wodurch die Busstation (14; 15; 23) die Funktionalität eines Busmonitors hat.

4. Busstation nach einem der Ansprüche 1-3,
wobei die Busmonitoreinrichtung (30) auf Daten der Busstation (14; 15; 23) zugreift und diese in Form von Monitordaten erfasst, um diese anschließend dem Bussystem (5; 40) wieder zur Verfügung zu stellen, wodurch die Busstation (14; 15; 23) die Funktionalität eines Busmonitors hat.

5. Busstation nach einem der voranstehenden Ansprüche,
wobei die Busmonitoreinrichtung (30) eine Programmeinheit umfasst, die auf die Datentelegramme des Bussystems (5; 40) als auch auf die Daten der Busstation (14; 15; 23) selbst zugreift und diese weiter verarbeitet.

6. Busstation nach einem der voranstehenden Ansprüche,
wobei die Busmonitoreinrichtung (30) zumindest einen Filter umfasst, der die erfassten Monitordaten nach bestimmten Filterkriterien auswertet.

7. Busstation nach Anspruch 6,
wobei der Filter ein Befehlsfilter ist.

8. Busstation nach Anspruch 6,
wobei der Filter ein Adressfilter ist.

9. Busstation nach Anspruch 6,
wobei der Filter ein kombinierter Befehls-Adressfilter ist.

10. Busstation nach einem der voranstehenden Ansprüche,
wobei die Busmonitoreinrichtung (30) einen Telegrammspeicher umfasst, in dem die erfassten Monitordaten gespeichert werden.

11. Busstation nach einem der voranstehenden Ansprüche,
wobei die durch die Busmonitoreinrichtung (30) erfassten Monitordaten dem Bussystem (5; 40) zur Weiterverarbeitung über das Businterface (42; 43) dem Bussystem (5; 40) zur Verfügung gestellt werden.

12. Busstation nach einem der voranstehenden Ansprüche,
wobei die Busstation (14; 15; 23) eine weitere Schnittstelle umfasst, über die die durch die Busmonitoreinrichtung (30) erfassten Monitordaten zur Weiterverarbeitung von einem externen Auswertesystem ausgelesen werden.

13. Busstation nach einem der voranstehenden Ansprüche,
wobei die Busmonitoreinrichtung (30) einen Monitor (21) oder ein Display zur Visualisierung der Monitordaten umfasst.

14. Busstation nach Anspruch 10,
wobei die Monitordaten online auswertbar sind.

15. Busstation nach Anspruch 10,
wobei die Monitordaten offline auswertbar sind.

16. Busstation nach Anspruch 1 oder 11,
wobei die Busmonitoreinrichtung (30) die gewonnen Monitordaten selbsttätig anderen Busstationen (14; 15; 23) oder an ein Auswertesystem weiterleitet.

17. Busstation nach einem der voranstehenden Ansprüche,
wobei die Busstation ein Sensor (14) oder ein Aktor (15) ist.

18. Busstation nach einem der Ansprüche 1-16,
wobei die Busstation eine Steuereinheit (23) zum Einlesen der Prozessdaten der Sensorik und zum Ausgeben von Prozessdaten zur Aktorik ist.

19. Busstation nach Anspruch 18,
wobei die Steuereinheit (23) eine speicherprogrammierbare Steuerung ist.

20. Busstation nach einem der Ansprüche 1-16,
wobei die Busstation ein Gateway (41) ist, die zwei verschiedenartige Bussysteme (5; 40) miteinander verbindet.

21. Busstation nach einem der Ansprüche 1-16,
wobei die Busstation ein Bridge ist, die zwei gleichartige Bussysteme (5; 40) miteinander verbindet.

22. Netzwerk mit
- zumindest einem Bussystem (5; 40) und
- zumindest einer Busstation (14; 15; 23)) gemäß einem der voranstehenden Ansprüche,
wobei das Netzwerk über die in der Busstation (14; 15; 23) integrierte Busmonitoreinrichtung (30) überwacht wird.

23. Verfahren zur Durchführung eines Monitorings eines Bussystems (5; 40), bei dem eine Busstation (14: 15; 23) gemäß einem der Ansprüche 1 bis 21 an das Bussystem (5;40) angeschlossen wird und eine Überwachung des auf dem Bussystem (5: 40) ablaufenden Telegrammverkehrs aus der Busstation (14; 15; 23) heraus erfolgt.

24. Verfahren nach Anspruch 23,
wobei der Telegrammverkehr mit Hilfe einer in der Busstation (14; 15; 23) befindlichen Programmeinheit registriert und weiterverarbeitet wird.

## Claims

1. A bus station (14, 15, 23), which has a primary functionality to deliver process data in the form of telegrams, and which can be coupled to a bus system (5, 40), with:
- at least one bus interface (42, 43) for communication by the bus station (14, 15, 23) with the bus system (5, 40) and
- a bus monitor device (30), integrated in the bus station (14, 15, 23), which is coupled with the bus interface (42, 43) and provides a secondary functionality to the bus station (14, 15, 23), in that the bus monitor device (30) monitors, via the bus interface (42, 43), telegram traffic passing on the bus system (5, 40), wherein
the bus station (14, 15, 23) is adapted to communicate digitally with another bus station.

2. The bus station of claim 1, wherein
the bus monitor device (30) makes monitor data available to the bus system (5, 40), and/or receives monitor data from the bus system (5, 40).

3. The bus station of one of the preceding claims, wherein
the bus monitor device (30) accesses data telegrams of the bus system (5, 40) and gathers them in the form of monitor data, in order to make them subsequently available again to the bus system (5, 40), whereby the bus station (14, 15, 23) has the functionality of a bus monitor.

4. The bus station of one of the claims 1 to 3, wherein
the bus monitor device (30) accesses data of the bus station (14, 15, 23) and gathers it in the form of monitor data, in order to make it subsequently available again to the bus system (5, 40), whereby the bus station (14, 15, 23) has the functionality of a bus monitor.

5. The bus station of one of the preceding claims, wherein
the bus monitor device (30) comprises a program unit, which accesses the data telegrams of the bus system (5, 40) as well as the data of the bus station (14, 15, 23) itself, and processes them further.

6. The bus station of one of the preceding claims, wherein
the bus monitor device (30) comprises at least one filter, which evaluates the gathered monitor data in accordance with particular filter criteria.

7. The bus station of claim 6, wherein
the filter is a command filter.

8. The bus station of claim 6, wherein
the filter is an address filter.

9. The bus station of claim 6, wherein
the filter is a combined command-address filter.

10. The bus station of one of the preceding claims, wherein
the bus monitor device (30) comprises a telegram memory, in which the gathered monitor data is stored.

11. The bus station of one of the preceding claims, wherein
the monitor data gathered by the bus monitor device (30) is provided to the bus system (5, 40) via the bus interface (42, 43) to the bus system, for further processing.

12. The bus station of one of the preceding claims, wherein
the bus station (14, 15, 23) comprises a further interface, via which the monitor data gathered by the bus monitor device (30) is read out for further processing by an external evaluation system.

13. The bus station of one of the preceding claims, wherein
the bus monitor device (30) comprises a monitor (21) or a display for the visualisation of the monitor data.

14. The bus station of claim 10, wherein
the monitor data can be evaluated online.

15. The bus station of claim 10, wherein
the monitor data can be evaluated offline.

16. The bus station of claim 1 or 11, wherein
the bus monitor device (30) automatically forwards the monitor data obtained to other bus stations (14, 15, 23), or to an evaluation system.

17. The bus station of one of the preceding claims, wherein
the bus station is a sensor (14) or an actuator (15).

18. The bus station of one of the claims 1 to 16, wherein
the bus station is a control unit (23) for reading in the process data of the sensor system, and for outputting process data to the actuator system.

19. The bus station of claim 18, wherein
the control unit (23) is a programmable logic controller.

20. The bus station of one of the claims 1 to 16, wherein
the bus station is a gateway (41), which connects two different types of bus systems (5, 40) with one another.

21. The bus station of one of the claims 1 to 16, wherein
the bus station is a bridge, which connects two bus systems (5, 40) of the same type with one another.

22. A network with
- at least one bus system (5, 40), and
- at least one bus station (14, 15, 23) of one of the preceding claims, wherein
the network is monitored by the bus monitor device (30) integrated in the bus station (14, 15, 23).

23. A method for the execution of a monitoring of a bus system (5, 40), in which a bus station (14, 15, 23) of one of the claims 1 to 21 is connected to the bus system (5, 40), and a monitoring of the telegram traffic passing on the bus system (5, 40) takes place from the bus station (14, 15, 23).

24. The method of claim 23, wherein
the telegram traffic is registered and further processed with the aid of a program unit located in the bus station (14, 15, 23).

## Revendications

1. Station de bus (14 ; 15 ; 23), qui a une fonctionnalité primaire pour la fourniture de données de processus en forme de télégrammes et peut être couplée à un système de bus (5 ; 40), comprenant
- au moins une interface de bus (42 ; 43) pour la communication de la station de bus (14 ; 15 ; 23) avec le système de bus (5 ; 40) et
- un moniteur de bus (30) intégré à la station de bus (14 ; 15 ; 23), qui est couplé à l'interface de bus (42 ; 43) et confère à la station de bus (14 ; 15 ; 23) une fonctionnalité secondaire, le moniteur de bus (30) contrôlant à travers l'interface de bus (42 ; 43) un trafic de télégrammes se déroulant sur le système de bus (5 ; 40) ;
la station de bus (14, 15, 23) étant conçue pour communiquer par voie numérique avec une autre station de bus.

2. Station de bus suivant la revendication 1, dans laquelle le moniteur de bus (30) fournit au système de bus (5 ; 40) des données de moniteur et/ou reçoit des données de moniteur du système de bus (5 ; 40).

3. Station de bus suivant l'une des revendications précédentes, dans laquelle le moniteur de bus (30) accède à des télégrammes de données du système de bus (5 ; 40) et les saisit en forme de données de moniteur, pour les fournir ensuite de nouveau au système de bus (5 ; 40), la station de bus (14 ; 15 ; 23) ayant de ce fait la fonctionnalité d'un moniteur de bus.

4. Station de bus suivant l'une des revendications 1 - 3, dans laquelle le moniteur de bus (30) accède à des données de la station de bus (14 ; 15 ; 23) et les saisit en forme de données de moniteur, pour les fournir ensuite de nouveau au système de bus (5 ; 40), la station de bus (14 ; 15 ; 23) ayant de ce fait la fonctionnalité d'un moniteur de bus.

5. Station de bus suivant l'une des revendications précédentes, dans laquelle le moniteur de bus (30) comprend une unité de programme, qui accède aux télégrammes de données du système de bus (5 ; 40) comme aux données de la station de bus (14 ; 15 ; 23) elle-même et les traite.

6. Station de bus suivant l'une des revendications précédentes, dans laquelle le moniteur de bus (30) comprend au moins un filtre, qui évalue les données de moniteur saisies suivant des critères de filtrage définis.

7. Station de données suivant la revendication 6, dans laquelle le filtre est un filtre d'instructions.

8. Station de bus suivant la revendication 6, dans laquelle le filtre est un filtre d'adresses.

9. Station de bus suivant la revendication 6, dans laquelle le filtre est un filtre combiné d'instructions - adresses.

10. Station de bus suivant l'une des revendications précédentes, dans laquelle le moniteur de bus (30) comprend une mémoire de télégrammes, dans laquelle sont mémorisées les données de moniteur saisies.

11. Station de bus suivant l'une des revendications précédentes, dans laquelle les données de moniteur, saisies par le moniteur de bus (30), sont fournies au système de bus (5 ; 40) pour traitement à travers l'interface de bus (42 ; 43).

12. Station de bus suivant l'une des revendications précédentes, dans laquelle la station de bus (14 ; 15 ; 23) comprend une autre interface, à travers laquelle les données de moniteur, saisies par le moniteur de bus (30), sont sélectionnées pour traitement par un système d'évaluation externe.

13. Station de bus suivant l'une des revendications précédentes, dans laquelle le moniteur de bus (30) comprend un moniteur (21) ou un écran pour la visualisation des données de moniteur.

14. Station de bus suivant la revendication 10, dans laquelle les données de moniteur sont évaluables on-line.

15. Station de bus suivant la revendication 10, dans laquelle les données de moniteur sont évaluables off-line.

16. Station de bus suivant l'une des revendications 1 et 11, dans laquelle le moniteur de bus (30) transmet automatiquement les données de moniteur acquises à d'autres stations de bus (14 ; 15 ; 23) ou à un système d'évaluation.

17. Station de bus suivant l'une des revendications précédentes, dans laquelle la station de bus est un détecteur (14) ou un acteur (15).

18. Station de bus suivant l'une des revendications 1 - 16, dans laquelle la station de bus est une unité de commande (23) pour l'entrée des données de processus de la partie détecteur et pour la sortie de données de processus vers la partie acteur.

19. Station de bus suivant la revendication 18, dans laquelle l'unité de commande (23) est une commande à mémoire programmable.

20. Station de bus suivant l'une des revendications 1 - 16, dans laquelle la station de bus est une passerelle (41), qui relie entre eux deux systèmes de bus (5 ; 40) différents.

21. Station de bus suivant l'une des revendications 1 - 16, dans laquelle la station de bus est un pont, qui relie entre eux deux systèmes de bus (5 ; 40) analogues.

22. Réseau comprenant
- au moins un système de bus (5 ; 40) et
- au moins une station de bus (14 ; 15 ; 23) suivant l'une des revendications précédentes,
le réseau étant contrôlé par l'intermédiaire du moniteur de bus (30) intégré à la station de bus (14 ; 15 ; 23).

23. Procédé de mise en oeuvre d'un monitoring d'un système de bus (5 ; 40), dans lequel une station de bus (14 ; 15 ; 23), suivant l'une des revendications 1 à 21, est raccordée au système de bus (5 ; 40) et un contrôle du trafic de télégrammes, se déroulant sur le système de bus (5 ; 40), s'effectue hors de la station de bus (14 ; 15 ; 23).

24. Procédé suivant la revendication 23, dans lequel le trafic de télégrammes est enregistré et traité à l'aide d'une unité de programme située dans la station de bus (14 ; 15 ; 23).
